(19) Europäisches Patentamt

European Patent Office

Office européen des brevets

(11) **EP 3 664 356 A1**

(12) **EUROPEAN PATENT APPLICATION**

(43) Date of publication:
**10.06.2020  Bulletin 2020/24**

(51) Int Cl.:
*H04L 9/00* *(2006.01)*

(21) Application number: **18211181.5**

(22) Date of filing: **07.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **Rietman, Ronald**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **WHITE-BOX COMPUTATIONS USING SHARES AS RANDOMIZING INPUTS**

(57)    Some embodiments are directed to a computation device for performing a computation. One or more values of the computation are shared values that are stored as a plurality of shares. An operation of the computation is performed on operation input values to obtain an operation output value. The operation input values and the operation output value are shared values. The shares of the operation output value are computed from shares of the operation input values using one or more randomizing inputs. Randomizing inputs can be shares of further shared values different from the operation input values, for instance, outputs of previous operations of the computation or intermediate values of a mixing function applied to the computation inputs, making it harder to isolate randomness from the computation.

Fig. 1

## Description

FIELD OF THE INVENTION

The invention relates to a computation device, a computation method, a compiler device, a compiler method, and a computer readable storage medium.

BACKGROUND OF THE INVENTION

Many applications, for instance in the area of cryptography, involve computations using data that is supposed to be kept secret. A typical example is symmetric encryption of a plaintext message with a key, giving a ciphertext. Anybody who knows the key can decrypt the ciphertext to obtain the plaintext. It is therefore important to keep the key secret to everyone, except of course the intended recipients of the message. Another example in cryptography are digital signatures, that use a signing key that should be kept secret. However, sensitive data naturally does not occur just in cryptography, e.g., in machine learning, parameters of a learned model may be an asset that the owner of the model wants to keep private.

First of all, it is desirable for computations using sensitive data to be black-box secure. That means that an attacker who can choose inputs for the computation and observe the outputs, should not be able to infer too much information about the sensitive data. In the example given above this means that having many plaintext-ciphertext pairs encrypted under the same key, it should not be feasible to derive the key.

However, it is known that, in many cases, black-box security is insufficient. For instance, sensitive data used in computations may leak through various side channels. For instance, known side channels include timing information, e.g. how long the calculation takes as a function of the input; power usage; electromagnetic radiation emitted during the computation; cache misses; etcetera. For instance, side channels may enable to carry out so-called probing attacks. A probing attack is effectively a microscopic version of a power analysis attack in which one or more probes are connected to wires of the circuit that performs the computation. Such probes may allow to detect electrical current or voltage on the wire. If the probes are attached to the right circuit wires, sensitive information used in the computation may be derived from the observed signals, e.g., key material of a cryptographic computation.

A protection mechanism against probing attacks is known from "Private Circuits: Securing Hardware against Probing Attacks" by Yuval Ishai, Amit Sahai, and David Wagner in proceedings of CRYPTO 2003 (incorporated herein by reference and hereafter referred to as "Private Circuits"). In "Private Circuits", a computation is carried out on bits, wherein each bit of the computation is represented by multiple shares. The shares are randomized using random bits generated, e.g., by a pseudorandom generator that is itself secure against probing attacks. This way, a value represented by a number of shares cannot be obtained using a probe attack with fewer than that number of probes. As a consequence, a computation may be protected against probing attacks in the so-called grey-box setting where an attacker obtains information about the computation without actively interfering with it.

SUMMARY OF THE INVENTION

The inventors realized that, although "Private Circuits" may provide adequate protection against grey-box attacks, it may not sufficiently protect computations in a white-box context. In the white-box setting, an attacker may observe information about the computation but also exert influence over its execution, e.g., by introducing faults in intermediate values. The inventors discovered that this may allow the attacker to effectively eliminate the randomness used for the shares, thereby reducing or even removing the protection against probing attacks.

The inventors understood that such white-box attacks may be thwarted in at least two ways. A first way may be to ensure that changes to randomizing inputs used for computing on shares are likely to lead to a change in an output value of the computation. A second way may be to ensure that such randomizing input are uncorrelated to input, intermediate, and/or output values of the computation. The first way may make it harder to detect randomizing inputs, while the second way may make it harder to derive information about values from a subset of their shares. It may be believed, however, that these two ways are hard to reconcile in a single device. Indeed, the first way may suggest using an independent (pseudo-)random process as in "Private Circuits", whereas the second way may make such an independent process undesirable.

Interestingly, however, various devices and methods are provided as defined by the claims that address these and other concerns.

A first aspect of the invention concerns a computation device for performing a computation on one or more computation input values. A set of values may be stored in a memory. One or more values of the set of values may be shared values stored as a plurality of shares. An operation of the computation may be performed on a set of operation input values to obtain an operation output value, each stored as a plurality of shares. The shares of the operation output value may be computed from shares of the operation input values using at least one randomizing input. This randomizing input may be a share of a further shared value different from the operation input values that was previously computed by the computation device from the one or more computation input values, for example, an operation output value of a previously performed operation of the computation or an intermediate value of another computation on the computation input values contributing to an output value of the computation.

This use of randomizing inputs may be beneficial to protect against white-box attacks. Indeed, the randomizing input may be a share of another value that was computed from the one or more input value instead of, e.g., a value from a random process performed independently of the computation input values. Hence, changing the randomizing input may affect the further shared value, likely leading to a change in an output value of the computation. This makes it harder for the attacker to identify that this share is used as a randomizing input and/or to eliminate its use as a randomizing input. Moreover, being a share of the further shared value, the randomizing input may be uncorrelated to the further shared value itself, e.g., the further shared value may take on any value given the share, and also to other values of the computation. Hence, information leaks based on the randomizing input being correlated to such values may be prevented. Thus, as a consequence of using randomizing inputs from further shared values, various white-box attacks on the randomizing input are made more difficult.

In an embodiment, the computation comprises an evaluation of a block cipher on an input message. Block ciphers, e.g., AES, are a particularly relevant attack target for white-box attacks and may be particularly effectively protected by the techniques provided herein.

In an embodiment, the operation is a multiplication, performed by computing a set of masked products, e.g., products of shares of a first and second operation input value masked by a randomizing input, and computing shares of the product therefrom. By masking the share products computed as intermediate values, they may be uncorrelated to the inputs of the computation and/or their shares, yet allow to determine shares of the output, decreasing the usefulness of intermediate and/or output values of the multiplication for an attacker.

In an embodiment, the processor evaluates a first mixing function on one or more computation input values to obtain output values of the first mixing function; shares the output values of the first mixing function into shares of the output values of the first mixing function using at least one randomizing input, being an intermediate value of computing the first mixing function; and computes an inverse of the first mixing function on the shares of the output values of the first mixing function to obtain shares of the one or more computation input values. The computation is then performed based on the shares of the one or more computation input values. For instance, the mixing function may mix and confuse the inputs. Thereby, shares are computed that may be used as randomizing shares in the computation. Moreover, shares of the computation input values may be harder to recognize in the computation.

In an embodiment, the intermediate value of computing the first mixing function used as a randomizing input may be uncorrelated with the one or more computation input values, hence decreasing information that can be learned from the shares of the output values of the first mixing function. In an embodiment, when performing operations of the computation, the further shared value used for its randomizing input may be an operation output value of an operation of the computation or an intermediate value of computing the inverse of the first mixing function; both choices may make it harder to identify/eliminate the randomizing input.

In an embodiment, the first mixing function comprises a first mixing subfunction followed by a second mixing subfunction. When using an intermediate value of the first mixing function for randomizing inputs, the intermediate value may be of the second mixing subfunction, ensuring that the value is sufficiently mixed and confused.

In an embodiment, the processor is further configured to compute a second mixing function based on shares of output values of the computation to obtain shares of output values of the second mixing function; reconstruct the output values of the second mixing function from the shares of the output values of the second mixing function; and compute an inverse of the second mixing function on the output values of the second mixing function to obtain the output values of the computation. This may make it harder for an attacker to find shares of the computation output that could otherwise be used to mount, e.g., differential fault analysis-type attacks. In an embodiment, intermediate values of the second mixing function are uncorrelated with intermediate values of the computation. This prevents leakage of information about intermediate values of the computation through the second mixing function, e.g., through its inverse which may not be computed using shares.

In an embodiment, the first mixing function and/or the second mixing function comprises one or more rounds of a block cipher. Such a function may particularly effectively mix and confuse its inputs.

In an embodiment, the computation is a binary circuit computed on a set of bits. Various relevant computations, e.g., in cryptography, involve bit-level computation that can thus be effectively protected.

In an embodiment, the operation input values and the operation output value are not computed as an intermediate result of performing the operation. This may prevent leakage of the operation inputs and outputs should an attacker manage to obtain information about the intermediate results.

In an embodiment, the further value is previously computed in the most recent 25% of operations performed by the processor prior to the operation. This may make it harder for an attacker to detect the use of a share as a randomizing input since shares used as randomizing inputs are computed closely to shares of operation input values.

In an embodiment, the previously-computed share of the further shared value is used as a randomizing input for at most one operation. This may help to avoid unwanted cancellations arising from a randomizing input being used twice, e.g., being XORed twice to compute a share.

A further aspect of the invention concerns a compiler device. The compiler device may generate instructions to cause a processor system to perform a computation method. The compiler device may store addressing information for a set of values, one or more values of the set of values being shared values. Addressing information for a shared value may comprise share addresses for a plurality of shares of the shared value. The compiler device may generate instructions to perform an operation of the computation performed on shared values by selecting a share address of a share of a further shared value different from the operation input values and generating instructions that use the further shared value as a randomizing input. This way, instructions are obtained for performing a computation that provide improved protection against white-box attacks as outlined above.

Further aspects include a computation method and a compiler method. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all the steps of an embodiment of the method when the computer program is run on a computer. Preferably, the computer program is embodied on a computer readable medium.

The computation and compiler methods described herein may be applied in a wide range of practical applications. Such practical applications include user authentication and/or signing applications and providing of machine learning models with private parameters.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,

Fig. 1 schematically shows an example of an embodiment of a computation device,
Fig. 2 schematically shows an example of an embodiment of a computation device,
Fig. 3 schematically shows an example of an embodiment of a computation device,
Fig. 4 schematically shows an example of an embodiment of a compiler device,
Fig. 5a schematically shows an example of an embodiment of a computation method,
Fig. 5b schematically shows an example of an embodiment of a compiler method,
Fig. 5c schematically shows a computer readable medium having a writable part comprising a computer program according to an embodiment,
Fig. 5d schematically shows a representation of a processor system according to an embodiment.

List of Reference Numerals:

100 a computation device
130 a processor
131 an operation unit
140 a memory
141, 142 an operation input value
143 an operation output value
144 a further shared value
141.1, 141.2, 142.1, 142.2, 143.1, 143.2, 144.1, 144.2 a share of a shared value

200 a computation device
230 a processor
231 an operation unit
235 a first mixing unit
236 a sharing unit
237 a first inverse mixing unit
238 a computation unit
240 a memory
244 a further shared value
244.1 a share of a further shared value
245 one or more computation input values
246 intermediate values of the first mixing function
247 output values of the first mixing function
248 shares of the output values of the first mixing function
249 shares of the one or more computation input values
300 a computation device
330 a processor
331 an operation unit
335 a second mixing unit
336 a reconstruction unit
337 a second inverse mixing unit

338 a computation unit
340 a memory
341 shares of output values of the computation
342 shares of output values of the second mixing function
343 output values of the second mixing function
344 output values of the computation

400 a compiler device
430 a processor
431 an operation compiler unit
440 a memory
441 an operation
442 a set of instructions to perform an operation of the computation
450 addressing information
451-458 a share address for a share of a shared value
460 an address space
461, 462 an operation input value
463 an operation output value
464 a further shared value
461.1, 461.2, 462.1, 462.2, 463.1, 463.2, 464.1, 464.2 a share

900 a computation method
910 storing a set of values
920 performing an operation
922 computing the plurality of shares

950 a compiler method
960 storing addressing information
970 generating a set of instructions
972 selecting a share address
974 generating instructions

1000 a computer readable medium
1010 a writable part
1020 a computer program

1110 integrated circuit(s)
1120 a processing unit
1122 a memory
1124 a dedicated integrated circuit
1126 a communication element
1130 an interconnect
1140 a processor system

DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

In order to explain various aspects of the invention, some grey-box and white-box attacks and possible defenses are now discussed.

As discussed above, probing attacks may allow an attacker to gain information about a number of intermediate values of a computation, e.g., wires of a hardware implementation of a circuit, or values stored in memory, registers or storage in a processor-based implementation. A possible defense against such attacks, aimed to provide protection against an attacker who uses $d$ probes, may be to store sensitive values of the computation as at least $d + 1$ shares. Values may be stored, e.g., in the form of a wire of a hardware circuit or in a separate memory. A sensitive value may be a value of the computation which, when observed by the attacker, may leak at least part of a value to be protected, e.g., a secret key.

For instance, a sensitive value $V$ of the computation may be stored as $k$ shares $s_1, ...,s_k$, where $V = f(s_1, ...,s_k)$. Function $f$ may, for instance, be addition or exclusive-OR, also known as additive sharing. Function $f$ may also be multiplication, also known as multiplicative sharing. In order to provide protection against an adversary with $d$ probes, function $f$ preferably has the property that any subset with at most $d$ elements of the $k$-share set $\{s_1, ..., s_k\}$ does not give any information about the sensitive variable $V$ represented by the $k$-share set, or about any other sensitive variable of the algorithm. To share a value into multiple shares and/or to compute shares of an output value of an operation, randomizing inputs may be used. Conventionally, such a randomizing input may be obtained from a (pseudo-)random process that is independent of the computation of the circuit. For instance, a method to implement a boolean circuit using additive bit shares is known from "Private Circuits".

The inventors realized that, when applied in a white-box context, conventional techniques based on shares do not provide adequate protection. In the white-box context, an attacker may influence the execution of the computation. This may allow an attacker to locate calls to functions for determining a randomizing input, e.g., an implementation of a (pseudorandom process, and replace the randomizing input by a fixed value, say 0. This typically impacts the initialization of shares, for instance, some or all of the shares may be zero and/or the value stored as shares may be derivable from one or few shares.

Moreover, as the inventors realized, also output values of operations of the computation may be biased.

For instance, if a randomizing value used to compute shares of the output value is set to zero, then a share of an output value may give information about the value itself, even if the randomizing inputs used to determine shares of the input values of the operation were not manipulated. For instance, the probability that the output value equals zero given that a share is equal to zero may substantially different from the probability that the output value equals zero given that the share is equal to one. For instance, in some cases the first probability has been found to be 9/10 and the second probability has been found to be 3/4, allowing an attacker to gain significant information about the output value based on a single share.

Even worse, hiding random functions, e.g., processes that generate randomizing inputs, may not provide sufficient protection in a white-box context. Even if random functions are well-hidden in the program and it is not directly obvious whether a value, e.g., a bit, in the program is used to in a random function or used in the real computation, an attacker may still be able to determine whether a value is used for a random function. For instance, an attacker may fix the value, say to 0. If this does not affect an output of the computation, e.g., for any input the output is not affected, this may indicate that the value is part of to the random function; otherwise, the bit may belong to the functional computation.

Hence, by fixing random values in a conventional implementation, an attacker may effectively remove the random function from the computation. Shares may become constant or correlated to the value they represent. This makes the computation increasingly vulnerable, e.g., the computation may become vulnerable to probe analysis with a single probe. By "correlated" we generally mean that some kind of information about the value may be derived from the share, e.g., the probability distribution over possible represented values may differ from the probability distribution over possible represented value given a fixed value of the share. For instance, correlation may be expressed in terms of a correlation coefficient, a mean square contingency coefficient, a chi-square statistic, or Cramér's V measure. Correlations may be weak correlations, e.g., with a correlation coefficient smaller than -0.1 or larger than 0.1 or even with a correlation coefficient smaller than -0.01 or larger than 0.01. Similarly, "uncorrelated" or "not correlated" may mean, e.g., a correlation coefficient between -0.01 and 0.01 or between -0.1 and 0.1. It is noted that weak correlations may already be sufficient to derive at least some undesired information about sensitive values in a white-box context.

The inventors realized that white-box attacks aiming to remove randomness from the computation may be made harder in two ways. First, by letting a change to a randomizing input likely lead to a change in an output value of the computation. Second, by letting a randomizing input be uncorrelated to input, intermediate, and/or output values of the computation. The first way may make it harder to detect randomizing inputs, while the second way may make it harder to derive information about values from a subset of their shares. These ways seem to suggest different kinds of approaches. Indeed, the second way may suggest an independent (pseudo-)random process whereas the first way may make this undesirable. Surprisingly, in various embodiments, both ways may be combined in a single device, thus providing improved security against various white-box attacks.

Various embodiments may relate to randomizing inputs used when sharing values of shares or when performing operations on shares. It may be achieved such randomizing values, e.g., bits, are also functional, in that they represent or are a share of an intermediate value that has an effect on the outcome of the computation.

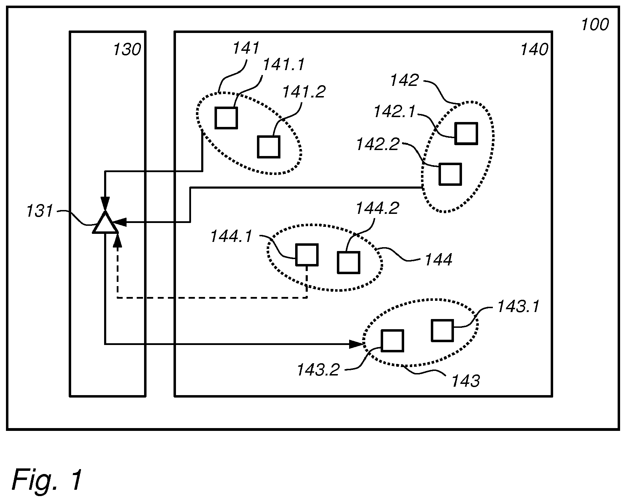

Fig. 1 schematically shows an example of an embodiment of a computation device 100. Computation device 100 is for performing a computation on one or more computation input values. Computation device 100 comprises a processor 130 and a memory 140. Memory 140 may be used for data and/or instruction storage. For example, memory 140 may comprise software and/or data on which processor 130 is configured to act. Memory 140 may also store a set of values, e.g., values 141, 142, 143 and/or 144. Processor 130 may be implemented as one or more processor circuits, e.g. microprocessors, ASICs, FPGA and the like. Memory 140 may comprise computer program instructions which are executable by processor 130. Processor 130, possibly together with memory 140, is configured according to an embodiment of a computation device.

One or more values of the set of values stored by memory 140 may be shared values. A shared value may be stored as a plurality of shares of the shared value. By way of example, value 141 shown in the figure is a shared value stored as share 141.1 and 141.2. Value 142 in the figure is a shared value stored as shares 142.1 and 142.2. Value 143 in the figure is a shared value stored as shares 143.1 and 143.2. Value 144 in the figure is a shared value stored as shares 144.1 and 144.2. Although not shown in this figure, memory 140 may also store values that are not shared shares. Although the shared values in the figure are stored as two shares, in general, any number of shares may be used, e.g., 3 shares, 5 shares, or more. Different shared values may be stored with different amounts of shares. In an embodiment, some or all values stored in the memory are bits, e.g., some or all shared values are bits. Values or shared values can also be integers modulo a prime or non-prime modulus, field elements, etcetera. Typically, shares of a shared value are of the same type as the value itself, e.g., shares of bits are bits, shares of field elements are field elements, etcetera. The number of shared values stored in memory 140 can be large, e.g., at least 100, at least 1000, or at least 10000.

A shared value may be defined by its shares by means of a reconstruction function mapping the plurality of shares to the shared value. For instance, the reconstruction function may be a XOR function acting on a plurality of bits, in which case we refer to the shares of the shared value as a "XOR-sharing". The reconstruction function may also be an addition function acting on a plurality of integers modulo a common modulus, in which case we refer to the shares of the shared value as an "additive sharing". A reconstruction function of a secret-sharing scheme such as Shamir secret-sharing or replicated secret sharing may also be used.

Conversely, shares of a shared value may be obtained by means of a sharing function, e.g., a secret-sharing function. A sharing function typically maps a value and one or more randomizing inputs to a plurality of shares of the value, e.g., such that the reconstruction applied on the plurality of shares returns the value. For instance, a $k$-share XOR-sharing of a value $V$ may be obtained using $k - 1$ random bits $r_1, ..., r_{k-1}$, as shares $(r_1, ..., r_{k-1}, r_k = V \oplus r_1 \oplus ... \oplus r_{k-1})$, with $\oplus$ denoting XOR. An additive sharing of a number $v$ may be similarly obtained as $(r_1, ..., r_{k-1}, r_k = V - r_1 - \cdots - r_{k-1})$ for random numbers $r_1 ..., r_{k-1}$. It is noted that, in these examples, setting all randomizing values to zero may result in sharing $(0,0, ... ,0, V)$, so that only one share completely determines the value that is represented. This further underlines the advantages of using shares of further shares values as randomizing inputs.

Processor 130 may perform various operations that have shared values as inputs and/or outputs. For instance, processor 130 may comprise an operation unit 131 configured to perform an operation on a set of operation input values to obtain an operation output value. The operation input values and the operation output values may be shared shares. For instance, the set of operation input values may comprise shared values 141, 142 and the operation output value may be shared value 143. The operation may for instance be an AND, a XOR, an OR, a NOT, or another logic operation; an addition, multiplication, subtraction, or another arithmetic operation; a function specified by a function table; etcetera. Although the figure shows operation unit 131 acting on two operation input values, the operation may also be nullary, unary, ternary, etc.

The computation performed by computation device 100 typically comprises multiple operations, for instance, at least 10 operations, at least 100 operations, or at least 1000 operations. Some or all of the operations may be performed on shares, e.g., with shared inputs and/or outputs. For instance, computation device 100 may be configured to obtain a circuit and to perform each operation specified by the circuit, e.g., using shares. For instance, the circuit may be a binary circuit, in which case the values operated on are typically bits, or an arithmetic circuit, in which case the values operated on are typically numbers. The operation is not necessarily given by a circuit though, e.g., operation unit 131 may be instructed to perform one or more operations by another unit of computation device 100, e.g., based on operations output values of earlier operations performed by the operation unit.

In various embodiments, the computation comprises an evaluation of a cryptographic function, e.g., an encryption of a message with a symmetric key, a digital signature generation with a signing keys such as RSA signatures, etc. For instance, such a key may be fixed, e.g., hardcoded in the computation. For instance, such an implementation may be provided, e.g., as software or hardware, to a user who should be able to use the key only in that particular implementation, and hence should not be able to extract the key from the implementation. This is a particularly relevant setting to protect against white-box attacks. In some embodiments, the computation comprises an evaluation of a block cipher, e.g., AES, on an input message. Especially block ciphers of SLT design (Substitution/Linear transformation block ciphers, sometimes referred to as Substitution-permutation network (SPN) block ciphers), such as AES (Rijndael), 3-Way, Kuznyechik, PRESENT, SAFER, SHARK, and Square, may be computed in various embodiments. The cryptographic function may also be key-less, such as a hash function. Protecting hash functions may be important, as they may be applied to secret data. In fact, hash functions may be part of a keyed design, such as if the hash function is used in HMAC.

Performing the operation may comprise computing the plurality of shares of output value 143, e.g., shares 143.1 and 143.2. For instance, operation unit 131 may compute each share of output value 143. Operation unit 131 may compute the share from shares of the set of operation input values, e.g., share 141.1, 141.2, 142.1 and/or 142.2. Typically, such a computation uses at least one randomizing input. Using a randomizing input may allow to achieve that shares of the output value 143 are themselves uncorrelated to the output value. Several examples of computations of the plurality of shares using at least one randomizing input are provided below.

Interestingly, the at least one randomizing input used by operation unit 131 may be a share, e.g., share 144.1, of a further shared value, e.g., further shared value 144. As also discussed elsewhere, this makes it harder for an attacker to eliminate the randomizing input from the operation performed by operation unit 131. As an example, suppose an attacker were to set the randomizing input to zero to test whether the randomizing input is part of a randomness computation or of the computation performed by the computation device. Since randomizing input 144.1 is also a share of a further shared value 144, such an attack is likely to affect one or more outputs of the computation. Hence, the attacker may not be able to identify share 144.1 as a randomizing input in this way.

Various beneficial choices may be made in selecting further shared value 144. For instance, further shared value 144 may be selected, e.g., at compile-time, from a set of potential shared values, e.g., randomly. For example, further shared value 144 is preferably selected to increase the likelihood that a fault in share 144.1 affects an output of the computation. Further shared value 144 is preferably also chosen to ensure that computed shares 143.1, 143.2 are uncorrelated to operation input values 141, 142 and/or operation output value 144. Further shared value 144 may be different from, and preferably even uncorrelated to, operation input values 141, 142, decreasing the probability of correlations between the input values and the shared share.

In various embodiments, previously computed share 144.1 is used as a randomizing input as few times as possible. For example, some or all previously computed hares may be used as a randomizing input at most ten or at most two times. Preferably, some or all previously computed shares 144.1 are each used at most at most once, e.g., as a randomizing input for an operation and/or as a randomizing input of sharing a value into a plurality of shares. Avoiding or at least minimizing re-use of randomizing inputs may help to avoid unexpected correlations between shares, and/or unwanted cancellations. For instance, if the same share is XORed twice to the same value as a randomizing input, these two randomizations may cancel each other out. The likelihood of this occurring is minimized by using a previously computed share as a randomizing input as few times as possible.

In some embodiments, further shared value 144 is selected as being computed at a similar time as the operation of operation unit 131 and/or at a similar time as the computation of operation input values 141, 142. This may make it harder for an attacker to isolate shares that are used as randomizing values. The further value may be previously computed in the most recent 25%, or even most recent 10% or 5%, of operations performed by operation unit 131. Instead or in addition, the further value may be computed in the 25%, or even 10% or 5%, of operations closest to the computation of at least one of the operation input values 141, 142. The term "similar time" may be interpreted as having a similar program counter, Lamport clock time, wall clock time, etcetera.

Typically, computation device 100 has previously computed share 144.1 from the one or more computation input values of the computation it performs. For instance, further shared value 144 may be an operation output value of an operation of the computation previously performed by processor 100, e.g., by operation unit 131. This is not necessary though. Generally, further shared value 144 may be computed in an operation that affects at least one output value of the computation, but is not necessarily is not part of the computation itself. For instance, further shared value 144 may be an operation output value of an operation used to compute at least one operation input value from the one or more computation input values. For instance, the operation may be an operation of various mixing functions or their inverses, as further discussed below. As another example, computation device 100 may use further shared value 144 in an operation occurring after the computation that contributes to the computation output. For instance, computation device 100 may compute a function, e.g., a one-way function, on one or more computation input values; add the result to the computation output values; and subtract it again before outputting them. The operation may be an operation of computing this function.

Using the at least one randomizing input, e.g., share 144.1 of further shared value 144, operation unit 131 may compute plurality of shares 143.1, 143.2 of operation output value 143 of the operation to be performed. Preferably, operation unit 131 does not compute operation input values 141, 142 and operation output value 143 as an intermediate result of performing the operation and/or anywhere else in the computation. Various examples are provided below. Not computing operation input and output values may improve the hiding of these values to an attacker, e.g., the attacker cannot read these values from memory, processor registers, or other locations where intermediate results of performing the operation are stored.

As a concrete example, the operation performed by operation unit 131 may comprise a multiplication of a first operation input value $X$, 141 and a second operation input value $Y$, 142. The operation input values may be additively shared. For instance, operation input value $X$, 141, may be shared as shares $\overline{X} = (x_1, ..., x_k)$, e.g. shares 141.1, 141.2, e.g., $X = x_1 + ... + x_k$. Operation input value $Y$, 142 may be represented by $\overline{Y} = (y_1, ..., y_k)$, e.g., $Y = y_1 + ... + y_k$. Computing the plurality of shares of the operation output value 143 may comprise computing a set of masked products. Such a masked product may be a product of a share of first operation value 141 and a share of second operation value 142, masked by a randomizing input. For instance, operation unit 131 may compute, for $1 \le i < j \le k$, masked product $s_{i,j} = (x_i y_j - r_{i,j})$ masked by randomizing input $r_{i,j}$, $1 \le i < j \le k$. Interestingly, such a masked product may be uncorrelated the operation input values due to the randomizing input.

Operation unit 131 may compute the plurality of shares of the operation output value from the set of masked products. For instance, operation unit 131 may add another product of a share of the first operation value and a share of the second operation value to each masked product, e.g., $r_{j,i} = s_{i,j} + x_j y_i$; interestingly, the result may still be uncorrelated to the operation input value. A share of an operation output value 143.1, 143.2 may be computed as a sum of masked products and/or products of shares of the first operation input value 141 and second operation input value 142, e.g., for

$$1 \le i \le k, z_i = x_i y_i + \sum_{j=1, j \ne i}^{k} r_{i,j}.$$

This procedure is readily adapted for first and second operation input values having different numbers of shares.

In some embodiments, the operation input values are bits, in which case additive sharing may correspond to a XOR-sharing and multiplication may correspond to a XOR gate. In particular, consider shares $\overline{X}$ = $(x_1, ..., x_k)$, e.g. shares 141.1, 141.2, e.g., $X = x_1 \oplus ... \oplus x_k$. and $\overline{Y} = (y_1, ..., y_k)$, e.g., $Y = y_1 \oplus \cdots \oplus y_k$. Shares $\overline{Z}$ = $(z_1, ... , z_k)$ of $Z = XY$ may be calculated as described above, e.g., using $k(k - 1)/2$ randomizing input bits $r_{i,j}$ with $1 \le i < j \le k$: for $1 \le i < j \le k$, operation unit 131 may calculate masked product $(x_iy_j \oplus r_{i,j})$, and value $r_{j,i} = (x_iy_j \oplus r_{i,j}) \oplus x_jy_i$ therefrom, and compute shares of the operation output values, $1 \le i \le k$, as

$$z_i = x_iy_i \oplus \bigoplus_{j=1, j \ne i}^{k} r_{i,j}.$$

For example, if both $X$ and $Y$ are shared as two shares, randomizing input $r_{1,2}$ may be used to compute masked product $r_{2,1} = (x_1y_2 \oplus r_{1,2}) \oplus x_2y_1$ and operation output value shares $z_1 = x_1y_1 \oplus r_{1,2}$, $z_2 = x_2y_2 \oplus r_{2,1}$.

With respect to this particular example, it is noted that if an attacker replaces randomizing input $r_{1,2}$ by 0, then $z_1 = x_1y_1$ and $z_2 = x_2y_2 \oplus x_1y_2 \oplus x_2y_1$. In this case, even if the marginal distribution of each $x_i$ and $y_i$ is uniform and independent of $X$ and $Y$, then $z_2$ may be used by an attacker to gain information about $Z$, e.g., because $\Pr[Z = 0|z_2 = 0] = 9/10$, and $\Pr[Z = 0|z_2 = 1] = 1/2$, which are different from $\Pr[Z = 0] = 3/4$. This further illustrates the advantages of using a further shared value as a randomizing input, making it harder for an attacker to find the randomizing input.

Various other ways of computing the shares of operation output value 143 may be used by operation unit 131. For instance, operation unit 131 may simulate known protocols for performing an operation on secret-sharing scheme such as Shamir secret sharing, replicated secret sharing, or any multiplicative secret sharing scheme, e.g., a multiplication protocol. As a concrete example, in a known multiplication protocol for Shamir secret sharing performed by multiple parties, each party has Shamir secret shares of two values to be multiplied, computes a product of the two shares, and shares this product among the parties. Each party then computes a Shamir share of the product of the two values as a linear combination of its shares of the computed products. This protocol may be simulated by operation unit 131 by computing products of respective shares of operation input values 141, 142; computing a plurality of shares for each computed product, using at least one share of a further shared value as a randomizing input in computing the shares; and computing the shares of the operation output value 143 as linear combinations of the respective shares of the computed products. More generally, various protocols for interactively performing an operation on shared values, e.g., multi-party computations, may be simulated by executing the protocol steps of each party, using shares of further shared values as randomizing inputs when needed.

It is noted that, in addition to performing operations that use at least one randomizing input, computation device 100 may also perform operations that do not use a randomizing input. For example, computation device 100 may perform one or more additions operations, an addition operation being performed by computing each share 143.1, 143.2 of the operation output value as a sum of shares of the respective operation input values 141, 142. For example, the sum may be a XOR. For example, in the above notation, $\overline{X} \oplus \overline{Y} = (x_1 \oplus y_1, ..., x_k \oplus y_k)$ may be a share representation of $X \oplus Y$.

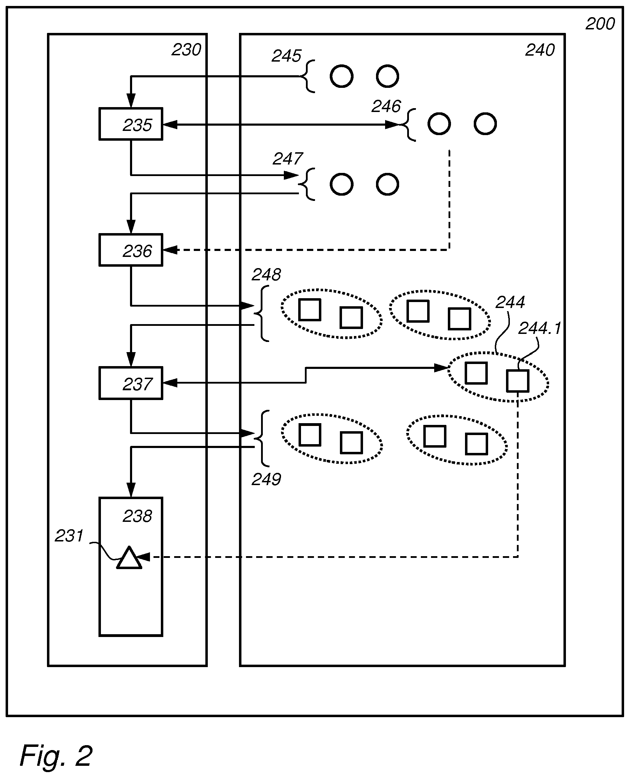

Fig. 2 schematically shows an example of an embodiment of a computation device 200. Computation device 200 may comprise a processor 230 and/or a memory 240. Memory 240 may be used for data and/or instruction storage. For example, memory 240 may comprise software and/or data on which processor 230 is configured to act. Processor 230 may be implemented as one or more processor circuits, e.g. microprocessors, ASICs, FPGA and the like. Memory 240 may comprise computer program instructions which are executable by processor 230. Processor 230, possibly together with memory 240, is configured according to an embodiment of a computation device. For example, computation device 200 may be based on computation device 100, processor 230 may be based on processor 130, and/or memory 240 may be based on memory 140. One or more operations of computation device 200 may be performed by an operation unit 231, e.g., based on operation unit 131.

Computation device 200 is for performing a computation on one or more computation input values. Memory 240 may be configured to store a set of values. One or more values of the set of values may be stored as shared values. Such a shared value may be stored as a plurality of shares of the shared value. Computation device 200 demonstrates obtaining shares of the one or more computation input values making effective use of randomizing inputs.

Computation device 200 may comprise a first mixing unit 235 configured to evaluate a first mixing function on one or more computation input values 245 to obtain output values 247 of the first mixing function. The first mixing function is an invertible function. The first mixing function is preferably selected to mix and confuse the one or more computation input values 245, e.g., individual output values 247 are uncorrelated to individual computation input values. This may have as an advantage that operations performed on output values 247 are hard to relate to the original computation input values 245. For instance, the first mixing function may comprise one or more rounds of a block cipher such as AES, e.g., with fixed, randomly generated round keys. The first mixing function may be computed, e.g., by evaluating an obtained binary circuit on the one or more computation input values 245. The first mixing computation is typically not computed using shares.

In some embodiments, the first mixing function may be similar to the function to be computed by computation device 200, e.g., both may comprise one or more block cipher rounds, making it harder for an attacker to understand the structure of the computation. Still, intermediate values 246 of computing the first mixing function are preferably uncorrelated with intermediate values of the computation. Otherwise, intermediate values 246 could be used to gain information about the computation. For example, if the first mixing function is a block cipher round, its round key may be independent from the round keys of the computation, e.g., generated randomly.

Interestingly, in general, not just output values 247 are mixed and confused, also at least some intermediate values 246 of the first mixing function are generally mixed and confused from, e.g., uncorrelated to, the computation input values 245. This is generally the case for intermediate values that are relatively close to the output values 247 in the computation of the first mixing function. This may make such intermediate values suitable for use as randomizing inputs by processor 230 later. In some embodiments, the first mixing function comprises a first mixing subfunction followed by a second mixing subfunction, for example, each comprising one or more block cipher rounds. This may particularly help to prevent correlations between intermediate values of the second mixing subfunction and computation input values 245, making such intermediate values particularly suitable as randomizing inputs.

Computation device 200 may further comprise a sharing unit 236 configured to share output values 247 of the first mixing function into shares 248 of these output values 247. Sharing a value into its shares typically comprises computing the shares of the value from the value using one or more randomizing inputs. For instance, the randomizing inputs may help to ensure that no single share, or sometimes even no strict subset of shares, depends on the value in a predictable way. Various ways of sharing values have been described, e.g., using $k - 1$ randomizing input bits $r_1,...,r_{k-1}$, sharing unit 236 may share a bit $V$ as $(r_1,...,r_{k-1}, r_k = V \oplus r_1 \oplus ... \oplus r_{k-1})$, or using $k - 1$ randomizing input numbers $r_1,...,r_{k-1}$, sharing unit 236 may share a number $V$ as $(r_1,...,r_{k-1}, r_k = V - r_1 - \cdots - r_{k-1})$.

Interestingly, randomizing inputs used for the sharing may be intermediate values 246 of computing the first mixing function. Hence, the randomizing inputs are themselves functional in computing the first mixing function and hence indirectly in performing the computation. This may make it harder to identify and/or eliminate these randomizing inputs. Preferably, an intermediate value used as a randomizing input is uncorrelated with the one or more computation input values 245, as described above, e.g., the randomizing input may be computed near the end of the first mixing function. For instance, if the first mixing function comprises a first mixing subfunction followed by a second mixing subfunction, the intermediate value may be an intermediate value of the second mixing subfunction.

Computation device 200 may further comprise a first inverse mixing unit 237 configured to compute an inverse of the first mixing function, e.g., computed by first mixing unit 235, on shares 248 of the output values of the first mixing function. For instance, the inverse may be obtained as a circuit, e.g., a binary circuit, first inverse mixing unit 237 being configured to perform the operations of the gates of the circuit. For instance, the respective operations may be performed as described for operation unit 131 of computation device 100. For instance, shares of operation output values of the respective operations may be computed from shares of respective operation input values using respective one or more randomizing inputs. For example, the respective one or more randomizing inputs used to compute the inverse of the first mixing function may be intermediate values 246 of the first mixing function, shares 248 of the output values shares of the first mixing function, and/or intermediate values of the inverse of the first mixing function.

Generally, first inverse mixing unit 237 computes the inverse of the first mixing function using shares, e.g., its inputs, intermediate values, and/or outputs 249 are shared values. Shown in the figure is an intermediate value 244 stored as a plurality of shares including a share 244.1. The outputs of the inverse of the first mixing function may be shares 249 of the respective one or more computation input values 245 input to the first mixing function. Thereby, shares of the one or more input values are obtained that are uncorrelated to the computation input values themselves and thereby less useful for an attacker to derive sensitive information.

Computation device 200 may also comprise a computation unit 238 configured to perform the computation on the one or more computation input values, e.g., based on processor 130 of computation device 100. Computation unit 238 may perform the computation based on shares 249 of the one or more computation input values. For instance, computation unit 238 may comprise an operation unit 231 configured to perform one or more operations of the computation, e.g., based on operation unit 131 of computation device 100. Generally, such an operation unit uses at least one randomizing input to compute the plurality of shares of its operation output value, and this at least one randomizing input may be a share of a further shared value. This share may be an operation output value of an operation of the computation. In some embodiments, however, at least one randomizing input may be a share 244.1 of an intermediate value 244 of computing the inverse of the first mixing function. For instance, this may help to ensure that sufficient randomizing inputs are available for the initial operations of the computation. For example, at least one operation performed by operation unit 231 may operate on shares 249.

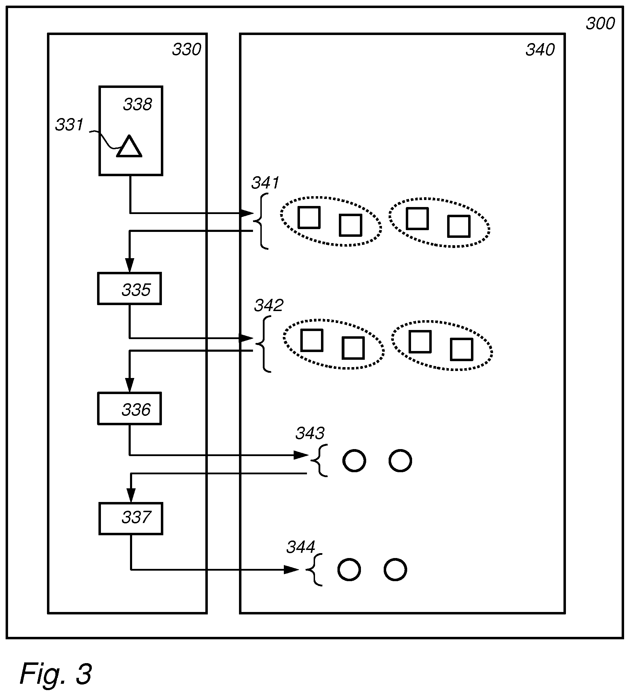

Fig. 3 schematically shows an example of an embodiment of a computation device 300. Computation device 300 may comprise a processor 330 and/or a memory 340. Memory 340 may be used for data and/or instruction storage. For example, memory 340 may comprise software and/or data on which processor 330 is configured to act. Processor 330 may be implemented as one or more processor circuits, e.g. microprocessors, ASICs, FPGA and the like. Memory 340 may comprise computer program instructions which are executable by processor 330. Processor 330, possibly together with memory 340, is configured according to an embodiment of a computation device. For example, computation device 300 may be based on computation device 100 or 200, processor 330 may be based on processor 130 or 230, and/or memory 340 may be based on memory 140 or 240. One or more operations of computation device 300 may be performed by an operation unit 331, e.g., based on operation unit 131 or 231.

Computation device 300 is for performing a computation on one or more computation input values. Memory 340 may be configured to store a set of values. One or more values of the set of values may be stored as shared values. Such a shared value may be stored as a plurality of shares of the shared value. Computation device 300 demonstrates obtaining output values of a computation performed using shares.

Computation device 300 may comprise a computation unit 338 configured to perform the computation of computation device 300, e.g., comprising an operation unit 331 configured to perform an operation of the computation. Various examples are described herein, e.g., with respect to computation unit 238 of computation device 200. Computation unit 338 may provide shares 341 of output values of the computation.

Computation device 300 may further comprise a second mixing unit 335 configured to compute a second mixing function based on the shares 341 of the output values of the computation. The considerations for selecting the second mixing function may be similar to those for selecting the first mixing function computed by first mixing unit 235, e.g., the second mixing function may mix and confuse the output values of the computation, e.g., the second mixing function may comprise one or more rounds of a block cipher such as AES. An advantage of applying a second mixing function to the computation outputs before reconstructing them is that it may become harder for an attacker to locate shares of the computation output that could otherwise be used to mount various types of attacks, e.g., differential fault analysis attacks. The second mixing function may be similar to the computation being performed by computation device 300, e.g., both can comprise AES rounds. Preferably, intermediate values of the second mixing function are uncorrelated with intermediate values of the computation, e.g., to further complicate differential fault analysis. For instance, AES rounds with different, e.g., randomly generated, round keys may be used.

Second mixing unit 335 typically computes the second mixing function using shares, e.g., its input values 341, its intermediate values, and/or its output values 342 are shared shares. For instance, operations of the second mixing function may be executed by an operation unit similar to operation unit 131 of computation device 100. When using a share of a further shared value as a randomizing input of an operation, various choices are available for selecting a further shared value, e.g., the further shared value may be an operation output value of an operation of the computation performed by computation unit 338, of an operation of the second mixing function itself, or of another computation performed by computation device 300 on shares, e.g., a computation of an inverse of a first mixing function as by first inverse mixing unit 237.

Computation device 300 may further comprise a reconstruction unit 336 configured to reconstruct output values 343 of the second mixing function from shares 342 of the output values of the second mixing function. For instance, reconstruction unit 336 may apply a reconstruction function to respective pluralities of shares representing the respective output values 343. For instance, reconstruction unit 336 may compute a XOR of shares in case of XOR-sharing, a sum of shares in case of additive sharing, and the like.

Computation device 300 may also comprise a second inverse mixing unit 337. Second inverse mixing unit 337 may be configured to compute an inverse of the second mixing function on output values 343 of the second mixing function to obtain output values 344 of the computation. For instance, second inverse mixing unit 337 may obtain the inverse of the second mixing function as a binary or arithmetic circuit and evaluate the circuit gate-by-gate. Interestingly, the output values 344 of the computation may be uncorrelated to the output values 343 of the second mixing function that the inverse is computed of. This may make it harder to trace output values 344 backward into the computation, e.g., to mount subsequent attacks such as differential fault analysis-type attacks. Second inverse mixing unit 337 may output the output values 343 of the computation, e.g., provide them to a graphical user interface unit of computation device 300 for presenting them to a user, provide them to another unit of computation device 300 for further processing, and the like.

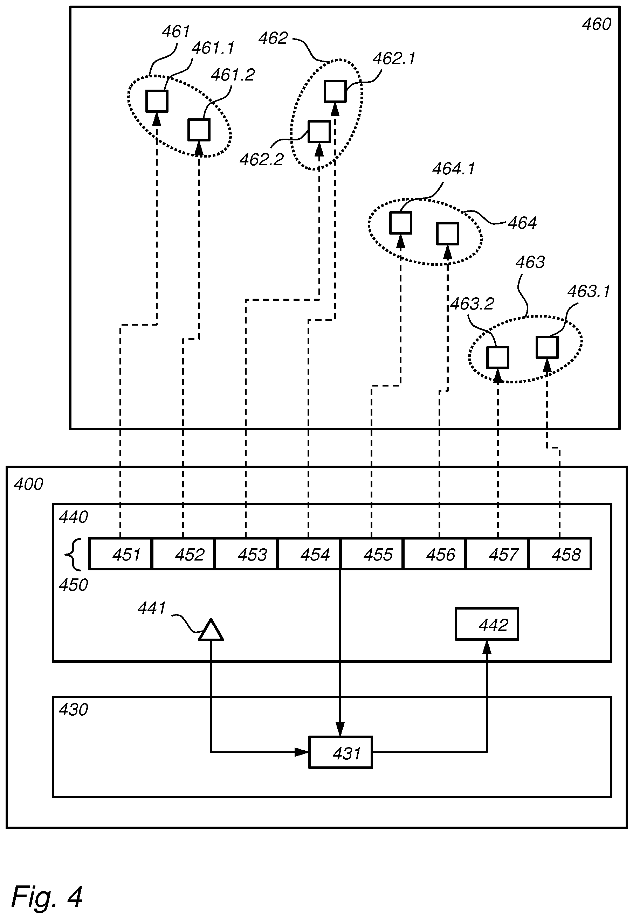

Fig. 4 schematically shows an example of an embodiment of a compiler device 400. Compiler device 400 may comprise a processor 430. Compiler device 400 may further comprise a memory 440. Memory 440 may be used for data and/or instruction storage. For example, memory 440 may comprise software and/or data on which processor 430 is configured to act. Processor 430 may be implemented as one or more processor circuits, e.g. microprocessors, ASICs, FPGA and the like. Memory 440 may comprise computer program instructions which are executable by processor 430. Processor 430, possibly together with memory 440, is configured according to an embodiment of a compiler device.

Compiler device 400 may be for generating instructions to cause a processor system to perform a computation method according to an embodiment, e.g., computation method 900, for performing a computation on one or more computation input values. The computation method may comprise storing a set of values, e.g., the set of values may be addressed from an address space 460. One or more values of the set of values may be shared values. Such a shared value may be stored as a plurality of shares of the shared value. For instance, the set of values may comprise shared values 461, 462, 463, and/or 464. Shared value 461 may be stored as shares 461.1, 461.2. Shared value 462 may be stored as shares 462.1, 462.2. Shared value 463 may be stored as shares 463.1, 463.2. Shared value 464 may be stored as shares 464.1, 464.2. It will be understood that address space 460 is shown for explication purposes only and is not typically part of compiler device 400.

Memory 440 of compiler device 430 may be configured to store addressing information 450 for the values in addressing space 460. One or more values of the set of values, e.g., values 461-464, may be shared shares. Addressing information for a shared value may comprise share addresses for a plurality of shares of the value. For example, a share address may comprise one or more of a memory address, an array index, and a variable name of the share. Shown in the figure by way of example are share address 451 of share 461.1, share address 452 of share 461.2, share address 453 of share 462.1, share address 454 of share 462.2, share address 455 of share 463.1, share address 456 of share 463.2, share address 457 of share 464.1, and share address 458 of share 461.2. For values that are not shared values (not shown in the figure), addressing information may similarly comprise one or more of a memory address, an array index, and a variable name of the value. For example, instructions generated by compiler device 430 may comprise loading instructions, e.g., for reading from a memory at the memory address, for reading an array at the array index, or for reading the variable. Instructions generated by compiler device 430 may also comprise storing instructions, e.g., instructions for writing to a memory at the memory address, for writing to an array at the array, or for writing to the variable.

Processor 430 may comprise an operation compiler unit 431 configured to generate a set of instructions 442 to perform an operation 441 of the computation to be performed. For instance, processor 430 may store the resulting instructions in memory 440, as shown in the figure. Processor 430 may instruct the operation compiler unit 431 to generate such instructions for multiple operations, e.g., each operation of the computation, e.g., from a circuit obtained for the computation. For instance, processor 430 may generate instructions for processor 130, processor 230, or processor 330 to perform computation as discussed with respect to the respective devices. Operation compiler unit 431 may also be configured to generate instructions for operations, e.g., on shares, that are not part of the computation to be performed, e.g., an inverse of a first mixing function as performed by first inverse mixing unit 237, a second mixing function as performed by second mixing unit 335, and the like. Operation 441 may be on a set of operation input values, e.g., values 461 and 462, to obtain an operation output value, e.g., value 463. The operation input values and the operation output values may be shared shares.

In order to generate set of instructions 442, operation compiler unit 431 may be configured to select a share address of share of a further shared value different from the operation input values, e.g., share address 455 of share 464.1 of further shared value 464. For example, operation compiler unit 431 may have previously generated instructions for computing this share 464.1 as a share of an operation output value of another operation, e.g., of the computation. For instance, operation compiler unit 431 may be configured to generate instructions for multiple operations, e.g., operations of the computation and/or other computations, e.g., an inverse of a first mixing computation as described herein. Share address 455 may be an address of an operation output value of such an operation. Various considerations for selecting further share 464.1 have been discussed herein, for example, with respect to operation unit 131 of computation device 100.

Operation compiler unit 431 may be further configured to generate, using share address 455, the instructions 442. The instructions 422 may be for computing the plurality of shares that define the operation output value, e.g., shares 463.1 and 463 defining operation output value 463. According to instructions 422, the shares of the operation output value may be computed from shares defining the set of operation input values, e.g., shares 461.1, 461.2, 462.1, and/or 462.2, using at least one randomizing input. The at least one randomizing input may be the share of the further shared value, e.g., share 461.1. For instance, the instructions may be instructions in assembly code or in a programming language, e.g., a compiled language such as C or an interpreted language such as Python. The instructions typically comprise load instructions for obtaining the shares of the operation input values and/or the share of the further shared value, e.g., load instructions for share addresses 451, 452, 453, 454, and/or 455. The instructions typically also comprise store instructions for storing the shares of the operation output value, e.g., store instructions for share addresses 457 and/or 458.

As a concrete example, in C code, operation compiler unit 431 may generate the following set of instructions 442 to perform an AND operation using XOR sharing as discussed with respect to operation unit 131:

```
int xy11 = shares[ix1] & shares[ix3];
int xy12 = shares[ix1] & shares[ix4];
int xy21 = shares[ix2] & shares[ix3];
int xy22 = shares[ix2] & shares[ix4];
int r21 = (xy12 ^ shares[ix5]) ^ xy21;
shares[ix7] = xy11 ^ shares[ix5];
shares[ix8] = xy22 ^ r21;
```

For instance, in the above code, ix1 may be share address 451, ix2 may be share address 452, ix3 may be share address 453, ix4 may be share address 454, ix5 may be share address 455, ix7 may be share address 457, and/or ix8 may be share address 458.

Processor 430 may be further configured to collect the generated instructions 442 for various operations, e.g., for operations of the computation and/or additional operations as discussed above, into an overall set of instructions to cause a processor system to perform a computation according to an embodiment. For instance, processor 430 may combine instructions generated by operation compiler unit 431 with various additional instructions, e.g., instructions to evaluate a first mixing function, to share values into shares, to reconstruct values from their shares, to compute an inverse of a second mixing function, etcetera, as described herein.

It is noted that the execution of the various computation devices and compiler devices may be implemented in a processor circuit, examples of which are shown herein. Fig. 1-4 show functional units that may be functional units of the processor circuit. For example, Fig. 1 may be used as a blueprint of a possible functional organization of the processor circuit. For example, the functional units shown in Fig. 1 may be wholly or partially be implemented in computer instructions that are stored at device 100, e.g., in an electronic memory of device 100, and are executable by a microprocessor of device 100, and similarly for the other devices. In hybrid embodiments, functional units are implemented partially in hardware, e.g., as coprocessors, e.g., crypto coprocessors, and partially in software stored and executed on device 100.

The computation device may have a user interface, which may include well-known elements such as one or more buttons, a keyboard, display, touch screen, etc. The compiler device may also have a user interface. The user interface may be arranged for accommodating user interaction for initiating a computation, e.g., an AES encryption performed using shares.

Memories 140, 240, 340, and/or 440 may be implemented as an electronic memory, say a flash memory, or magnetic memory, say hard disk or the like. The memories may comprise multiple discrete memories together making up the memory. The memory may also be a temporary memory, say a RAM. In the case of a temporary memory, the memory contains some means to obtain data before use, say by obtaining them over an optional network connection (not shown).

Typically, the computation and compiler devices each comprise a microprocessor which executes appropriate software stored at the device; for example, that software may have been downloaded and/or stored in a corresponding memory, e.g., a volatile memory such as RAM or a non-volatile memory such as Flash. Alternatively, the devices may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL etc.

In an embodiment, the computation device comprises an operation circuit. The computation device may comprise additional circuits, e.g., a first mixing circuit, a sharing circuit, a first inverse mixing circuit, a computation circuit, a second mixing circuit, a reconstruction circuit, and/or a second inverse mixing circuit. In an embodiment, the compiler device comprises an operation compiler circuit. The compiler device may comprise additional circuits. The circuits implement the corresponding units described herein. The circuits may be a processor circuit and storage circuit, the processor circuit executing instructions represented electronically in the storage circuits. A processor circuit may be implemented in a distributed fashion, e.g., as multiple sub-processor circuits. A memory may be distributed over multiple distributed sub-memories. Part or all of the memory may be an electronic memory, magnetic memory, etc. For example, the memory may have volatile and a non-volatile part. Part of the memory may be read-only.

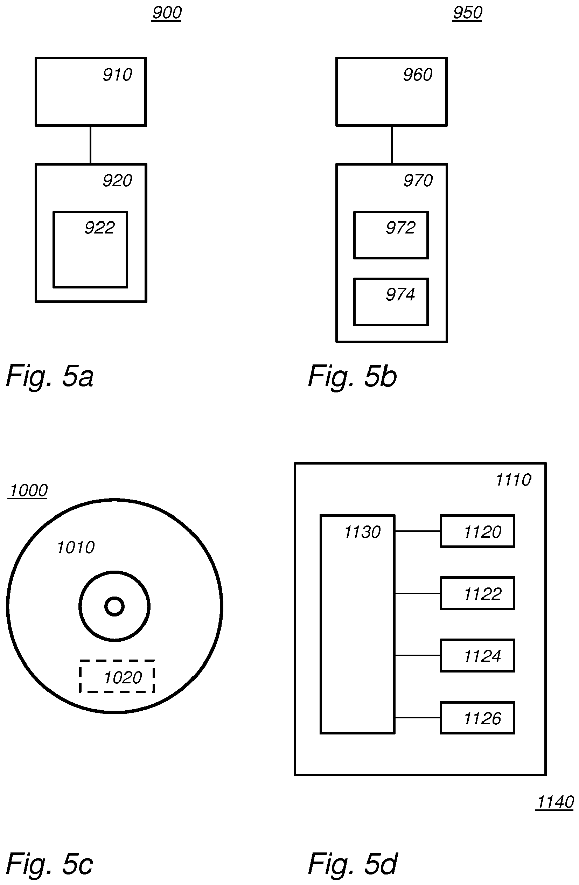

Fig. 5a schematically shows an example of an embodiment of a computation method 900. Computation method 900 may be for performing a computation on one or more computation input values.

Computation method 900 may comprise storing 910 a set of values. One or more values of the set of values may be shared values. A shared value may be stored as a plurality of shares of the shared value.

Computation method 900 may further comprise performing 920 an operation of the computation on a set of operation input values to obtain an operation output value. The operation input values and the operation output value may be shared values. Performing 920 the operation may comprise computing 922 the plurality of shares of the operation output value from shares of the set of operation input values using at least one randomizing input. The at least one randomizing input may be a share of a further shared value different from the operation input values. The share may have been previously computed from the one or more computation input values, e.g., as part of computation method 900.

Fig. 5b schematically shows an example of an embodiment of a compiler method 950. Compiler method 950 may be for generating instructions to cause a processor system to perform a computation method, e.g., computation method 900.

Compiler method 950 may comprise storing 960 addressing information for a set of values. One or more values of the set of values may be shared values. Addressing information for a shared value may comprise share addresses for a plurality of shares of the shared value.

Compiler method 950 may further comprise generating 970 a set of instructions to perform an operation of the computation. The operation may be on a set of operation input values to obtain an operation output value. The operation input values and the operation output value may be shared values.

Generating 970 the set of instructions may comprise selecting 972 a share address of share of a further shared value different from the operation input values. Said share may be computed based on the one or more computation input values in a previously generated set of instructions, e.g., as part of compiler method 950.

Generating 970 the set of instructions may further comprise generating 974 instructions for computing the plurality of shares that define the operation output value from shares defining the set of operation input values using at least one randomizing input. The at least one randomizing input may be the share of the further shared value.

Many different ways of executing the methods are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 910 and 920 may be executed, at least partially, in parallel. Moreover, a given step may not have finished completely before a next step is started.

Embodiments of the methods may be executed using software, which comprises instructions for causing a processor system to perform method 900 or 950. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of an embodiments of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

Fig. 5c shows a computer readable medium 1000 having a writable part 1010 comprising a computer program 1020, the computer program 1020 comprising instructions for causing a processor system to perform a computation method and/or a compiler method, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said computation or compiler method.

Fig. 5d shows in a schematic representation of a processor system 1140 according to an embodiment. The processor system comprises one or more integrated circuits 1110. The architecture of the one or more integrated circuits 1110 is schematically shown in Fig. 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contactless communication, using an antenna and/or connectors, respectively.

For example, in an embodiment, processor system 1140, e.g., computation device 100, 200 or 300, or compiler device 400, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A computation device (100) for performing a computation on one or more computation input values, the computation device comprising:

    - a memory configured to store a set of values, one or more values of the set of values being shared values, a shared value being stored as a plurality of shares of the shared value;
    - a processor configured to perform an operation of the computation on a set of operation input values to obtain an operation output value, the operation input values and the operation output value being shared values, performing the operation comprising computing the plurality of shares of the operation output value from shares of the set of operation input values using at least one randomizing input, wherein the at least one randomizing input is a share of a further shared value different from the operation input values, the computation device having previously computed said share from the one or more computation input values.

2. A computation device as in claim 1, wherein the computation comprises an evaluation of a block cipher on an input message.

3. A computation device as in claim 1 or 2, wherein the set of operation input values comprises a first operation input value and a second operation input value and the operation comprises a multiplication, computing the plurality of shares of the operation output value comprising computing a set of masked products, a masked product being a product of a share of the first operation input value and a share of the second operation input value masked by the randomizing input; and computing the plurality of shares of the operation output value therefrom.

4. A computation device as in any of the preceding claims, wherein the processor is further configured to:

    - evaluate a first mixing function on one or more computation input values to obtain output values of the first mixing function;
    - share the output values of the first mixing function into shares of the output values of the first mixing function using at least one randomizing input, the at least one randomizing input being an intermediate value of computing the first mixing function;
    - compute an inverse of the first mixing function on the shares of the output values of the first mixing function to obtain shares of the one or more computation input values, the computation being performed based on the shares of the one or more computation input values.

5. A computation device as in claim 4, wherein the further shared value is an operation output value of an operation of the computation or an intermediate value of computing the inverse of the first mixing function.

6. A computation device as any of the preceding claims, wherein the processor is further configured to:

    - compute a second mixing function based on shares of output values of the computation to obtain shares of output values of the second mixing function;
    - reconstruct the output values of the second mixing function from the shares of the output values of the second mixing function;
    - compute an inverse of the second mixing function on the output values of the second mixing function to obtain the output values of the computation.

7. A computation device as in any one of claims 4-6, wherein the first mixing function and/or the second mixing function comprises one or more rounds of a block cipher.

8. A computation device as in any of the preceding claims, wherein the computation is a binary circuit computed on a set of bits.

9. A computation device as in any of the preceding claims, wherein the operation input values and the operation output value are not computed as an intermediate result of performing the operation.

**10.** A computation device as in any of the preceding claims, wherein the further value is previously computed in the most recent 25% of operations performed by the processor prior to the operation.

**11.** A computation device as in any of the preceding claims, wherein the previously-computed share of the further shared value is used as a randomizing input for at most one operation.

**12.** A computation method (900) for performing a computation on one or more computation input values, the computation method comprising:

- storing a set of values, one or more values of the set of values being shared values, a shared value being stored as a plurality of shares of the shared value;
- performing an operation of the computation on a set of operation input values to obtain an operation output value, the operation input values and the operation output value being shared values, performing the operation comprising computing the plurality of shares of the operation output value from shares of the set of operation input values using at least one randomizing input, wherein the at least one randomizing input is a share of a further shared value different from the operation input values, said share having been previously computed from the one or more computation input values.

**13.** A compiler device (400) for generating instructions to cause a processor system to perform the method according to claim 12, the compiler device comprising:

- a memory configured to store addressing information for a set of values, one or more values of the set of values being shared values, addressing information for a shared value comprising share addresses for a plurality of shares of the shared value;
- a processor configured to generate a set of instructions to perform an operation of the computation, the operation being on a set of operation input values to obtain an operation output value, the operation input values and the operation output value being shared values, generating the set of instructions comprising:

    - selecting a share address of share of a further shared value different from the operation input values, said share being computed based on the one or more computation input values in a previous set of instructions generated by the processor;
    - generating instructions for computing the plurality of shares that define the operation output value from shares defining the set of operation input values using at least one randomizing input, wherein the at least one randomizing input is the share of the further shared value.

**14.** A compiler method (950) for generating instructions to cause a processor system to perform a method according to claim 12, the compiler method comprising:

- storing addressing information for a set of values, one or more values of the set of values being shared values, addressing information for a shared value comprising share addresses for a plurality of shares of the shared value;
- generating a set of instructions to perform an operation of the computation, the operation being on a set of operation input values to obtain an operation output value, the operation input values and the operation output value being shared values, generating the set of instructions comprising:

    - selecting a share address of share of a further shared value different from the operation input values, said share being computed based on the one or more computation input values in a previously generated set of instructions;
    - generating instructions for computing the plurality of shares that define the operation output value from shares defining the set of operation input values using at least one randomizing input, wherein the at least one randomizing input is the share of the further shared value.

**15.** A computer readable storage medium (1000) comprising transitory or non-transitory data (1020) representing instructions to cause a processor system to perform the method according to claim 12 and/or 14.

*Fig. 1*

Fig. 2

Fig. 3

Fig. 4

*900*

910

920

922

## Fig. 5a

*950*

960

970

972

974

## Fig. 5b

*1000*

1010

1020

## Fig. 5c

1110

1130

1120

1122

1124

1126

*1140*

## Fig. 5d

**Europäisches Patentamt**
**European Patent Office**
**Office européen des brevets**

# EUROPEAN SEARCH REPORT

Application Number

EP 18 21 1181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/063986 A1 (KONINKLIJKE PHILIPS NV [NL]) 20 April 2017 (2017-04-20) * page 3 * | 1-15 | INV. H04L9/00 |
| X | EP 3 300 291 A1 (GEMALTO SA [FR]) 28 March 2018 (2018-03-28) * pages 4,5; figures 3,4 * | 1-15 | |
| X | J Bos ET AL: "Differential computation analysis : hiding your white-box designs is not enough", , 1 January 2015 (2015-01-01), XP055310209, DOI: 10.1007/978-3-662-53140-2_11 Retrieved from the Internet: URL:https://pure.tue.nl/ws/files/4030894/589783120480631.pdf [retrieved on 2016-10-12] * section 6 * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 17 May 2019 | Billet, Olivier |

EPO FORM 1503 03.82 (P04C01)

## ANNEX TO THE EUROPEAN SEARCH REPORT
## ON EUROPEAN PATENT APPLICATION NO.

EP 18 21 1181

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2019

| Patent document cited in search report | | Publication date | Patent family member(s) | | Publication date |
|---|---|---|---|---|---|
| WO 2017063986 | A1 | 20-04-2017 | BR | 112018007132 A2 | 06-11-2018 |
| | | | CN | 108141352 A | 08-06-2018 |
| | | | EP | 3363142 A1 | 22-08-2018 |
| | | | JP | 2018537704 A | 20-12-2018 |
| | | | US | 2019074959 A1 | 07-03-2019 |
| | | | WO | 2017063986 A1 | 20-04-2017 |
| EP 3300291 | A1 | 28-03-2018 | EP | 3300291 A1 | 28-03-2018 |
| | | | WO | 2018060094 A1 | 05-04-2018 |